# EUROPEAN PATENT APPLICATION

(11) **EP 2 570 987 A1**
(43) Date of publication of application: **20.03.2013**
(21) Application number: 11780423.7
(22) Date of filing: 07.03.2011
(51) Int. Cl.: G06T 1/00, G06Q 50/00

(54) **IMAGE PROCESSING SYSTEM, IMAGE PROCESSING TERMINAL, IMAGE PROCESSING METHOD, PROGRAM, INFORMATION STORAGE MEDIUM, AND IMAGE PROCESSING DEVICE**

(30) Priority: 14.05.2010 JP 2010112129; 14.05.2010 JP 2010112128
(71) Applicant: Sony Computer Entertainment Inc., Tokyo 108-0075 (JP)
(72) Inventor: TSUDA, Munetaka, Tokyo 108-0075 (JP); TAKAHASHI, Masaki, Tokyo 108-0075 (JP)
(74) Representative: Turner, James Arthur
(86) International application number: PCT/JP2011/055219
(87) International publication number: WO 2011/142166

(57) **Abstract**

Provided is an image processing system, which allows images that are registered in each image management server to be easily grasped, and also allows a user that is registered as an associated user in each image management server to be easily grasped. A registered image acquisition unit (34) acquires, for each of image management servers (16), registered images stored in association with an account corresponding to a user. An associated-user-corresponding-image acquisition unit (38) acquires, for the each of the image management servers (16), associated-user-corresponding-images, which are images corresponding to an account of an associated user. A display output unit (42) outputs for display a screen including a registered image placement region, in which the registered image is placed in association with a corresponding one of the image management servers (16), and an associated-user-corresponding-image placement region, in which the associated-user-corresponding-image is placed in association with a corresponding one of the image management servers (16).

## Description

### Technical Field

The present invention relates to an image processing system, an image processing terminal, an image processing method, a program, an information storage medium, and an image processing device.

### Background Art

There is known an image sharing service that allows a user to share an image taken by a digital camera with another user by uploading the image to an image management server on the Internet that is accessible to the another user. There is also known an image sharing service that allows an image that is registered by a friend to be easily viewed by associating accounts of friend users.

### Citation List

### Patent Literature

[Patent Literature 1] US 2010/0085380 Al

### Summary of Invention

### Technical Problem

In recent years, various business entities have developed image management services such as an image sharing service. Therefore, a situation is conceivable in which a user selectively uses image management services depending on contents of the services developed by respective business entities. Then, it is desired that the user can easily grasp what kind of images are registered in each image management service of which the user holds an account. Especially in a situation in which an image is to be shared, it is desired that the user can easily grasp which user is associated as an associated user in each image management service.

There is also known an image management service that manages a plurality of highly relevant images in association with each other. When the plurality of associated images are to be shared between users, it is desired that an image display mode be also shared between the users.

However, display modes that can be set may be different between image management services, and hence a situation may occur in which a display mode that can be set to images managed in one image management service cannot be set to images managed in another image management service.

The present invention has been made in view of the above-mentioned problems, and therefore has an object to provide an image processing system, an image processing terminal, an image processing method, a program, and an information storage medium, which allow images that are registered in each image management server to be easily grasped, and also allow a user that is registered as an associated user in each image management server to be easily grasped.

It is another object of the present invention to provide an image processing system, an image processing method, an image processing device, a program, and an information storage medium, which allow a display mode of a plurality of images to be shared to be set without being aware of an image management server to which the images are registered.

### Solution to Problem

In order to solve the above-mentioned problems, according to the present invention, there is provided an image processing system, including: a registered image acquisition unit that acquires, in response to a request from a user, for each of a plurality of image management servers, registered images stored in the image management server in association with an account corresponding to the user in the image management server; an associated-user-corresponding-image acquisition unit that acquires, for the each of the plurality of image management servers, associated-user-corresponding-images registered in the image management server as images corresponding to an account of an associated user of the user; and a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

According to the present invention, there is also provided an image processing terminal, including: a registered image acquisition unit that acquires, in response to a request from a user, for each of a plurality of image management servers, registered images stored in the image management server in association with an account corresponding to the user in the image management server; an associated-user-corresponding-image acquisition unit that acquires, for the each of the plurality of image management servers, associated-user-corresponding-images registered in the image management server as images corresponding to an account of an associated user of the user; and a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

According to the present invention, there is also provided an image processing method, including: a registered image acquisition step of acquiring, in response to a request from a user, for each of a plurality of image management servers, registered images stored in the image management server in association with an account corresponding to the user in the image management server; an associated-user-corresponding-image acquisition step of acquiring, for the each of the plurality of image management servers, associated-user-corresponding-images registered in the image management server as images corresponding to an account of an associated user of the user; and a display output step of outputting for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

According to the present invention, there is also provided a program for causing a computer to function as: a registered image acquisition unit that acquires, in response to a request from a user, for each of a plurality of image management servers, registered images stored in the image management server in association with an account corresponding to the user in the image management server; an associated-user-corresponding-image acquisition unit that acquires, for the each of the plurality of image management servers, associated-user-corresponding-images registered in the image management server as images corresponding to an account of an associated user of the user; and a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

According to the present invention, there is also provided a computer-readable information storage medium having stored thereon a program for causing a computer to function as: a registered image acquisition unit that acquires, in response to a request from a user, for each of a plurality of image management servers, registered images stored in the image management server in association with an account corresponding to the user in the image management server; an associated-user-corresponding-image acquisition unit that acquires, for the each of the plurality of image management servers, associated-user-corresponding-images registered in the image management server as images corresponding to an account of an associated user of the user; and a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

According to the present invention, images registered in each image management server are placed in the registered image placement region in association with the image management server, and images registered in each image management server as images corresponding to an account of an associated user are placed in the associated-user-corresponding-image placement region in association with the image management server. Therefore, the user may easily grasp not only the images registered in each image management server but also the user registered as an associated user in each image management server.

In an aspect of the present invention, the image processing system further includes: a storage unit that stores an identifier of the account of the user in the each of the plurality of image management servers; and an image output request unit that outputs, to the each of the plurality of image management servers, an image output request in association with the identifier of the account in the image management server, the registered image acquisition unit acquires, in response to the image output request, the registered images output from the each of the plurality of image management servers, and the associated-user-corresponding-image acquisition unit acquires, in response to the image output request, the associated-user-corresponding-images output from the each of the plurality of image management servers. With this configuration, when making the image output request associated with the identifier of the account to each image management server, the image processing system may use the identifier of the account in each image management server, which is stored in the storage unit. Therefore, the user does not need to input the identifier of the account, which reduces the user's time and effort.

Further, in an aspect of the present invention, the registered image placement region includes a plurality of registered image placement sub-regions respectively corresponding to the plurality of image management servers, the associated-user-corresponding-image placement region includes a plurality of associated-user-corresponding-image placement sub-regions respectively corresponding to the plurality of image management servers, the each of the registered images is placed in one of the plurality of registered image placement sub-regions that corresponds to the registered image, and the each of the associated-user-corresponding-images is placed in one of the plurality of associated-user-corresponding-image placement sub-regions that corresponds to the associated-user-corresponding-image. With this configuration, the registered images are placed in different regions depending on the corresponding image management servers, and hence the user may easily grasp which registered images are registered in each image management server.

In this aspect, for the each of the plurality of image management servers, one of the plurality of registered image placement sub-regions that corresponds to the image management server and one of the plurality of associated-user-corresponding-image placement sub-regions that corresponds to the image management server may be placed in alignment with each other. With this configuration, for each image management server, the region in which the registered images are placed and the region in which the associated-user-corresponding-images are placed are aligned, and hence the user may easily recognize the contents registered in the image management servers in a collective manner for each of the image management servers.

According to the present invention, there is also provided another image processing system, including: a first image processing device; and a second image processing device, the first image processing device including an image designation data output unit that outputs image designation data for designating a plurality of images stored in an external image management server in association with an account of a user of the first image processing device in the external image management server, in association with display mode data representing a display mode of the plurality of images, the second image processing device including: an image designation data receiving unit that receives the image designation data output from the first imageprocessing device; an image acquisition unit that acquires the plurality of images, which are stored in the external image management server and designated based on the image designation data; and a display output unit that outputs for display the plurality of images acquired by the image acquisition unit, in the display mode in accordance with the display mode data associated with the image designation data.

According to the present invention, there is also provided another image processing method, including: an image designation data output step of outputting, by a first image processing device, image designation data for designating a plurality of images stored in an external image management server in association with an account of a user of the first image processing device in the external image management server, in association with display mode data representing a display mode of the plurality of images; an image designation data receiving step of receiving, by a second image processing device, the image designation data; an image acquisition step of acquiring, by the second image processing device, the plurality of images, which are stored in the external image management server and designated based on the image designation data; and a display output step of outputting for display, by the second image processing device, the plurality of images acquired in the image acquisition step, in the display mode in accordance with the display mode data associated with the image designation data.

According to the present invention, there is also provided an image processing device, including: an image designation data receiving unit that receives image designation data which is output from another image processing device, is associated with display mode data representing a display mode of a plurality of images stored in an external image management server in association with an account corresponding to a user of the another image processing device in the external image management server, and designates the plurality of images; an image acquisition unit that acquires the plurality of images, which are stored in the external image management server and designated based on the image designation data; and a display output unit that outputs for display the plurality of images acquired by the image acquisition unit, in the display mode in accordance with the display mode data associated with the image designation data.

According to the present invention, there is also provided another image processing device, including an image designation information output unit that outputs, to another image processing device, image designation information for designating a plurality of images stored in an external image management server in association with an account corresponding to a user of the image processing device in the external image management server, in association with display mode data representing a display mode of the plurality of images, the another image processing device including: an image designation information receiving unit that receives the image designation information; an image acquisition unit that acquires the plurality of images which are stored in the external image management server and designated based on the image designation information; and a display output unit that outputs for display the plurality of images acquired by the image acquisition unit, in the display mode in accordance with the display mode data associated with the image designation information.

According to the present invention, there is also provided another program for causing a computer to function as: an image designation data receiving unit that receives image designation data which is output from another image processing device, is associated with display mode data representing a display mode of a plurality of images stored in an external image management server in association with an account corresponding to a user of the another image processing device in the external image management server, and designates the plurality of images; an image acquisition unit that acquires the plurality of images, which are stored in the external image management server and designated based on the image designation data; and a display output unit that outputs for display the plurality of images acquired by the image acquisition unit, in the display mode in accordance with the display mode data associated with the image designation data.

According to the present invention, there is also provided another computer-readable information storage medium having stored thereon a program for causing a computer to function as: an image designation data receiving unit that receives image designation data which is output from another image processing device, is associated with display mode data representing a display mode of a plurality of images stored in an external image management server in association with an account corresponding to a user of the another image processing device in the external image management server, and designates the plurality of images; an image acquisition unit that acquires the plurality of images, which are stored in the external image management server and designated based on the image designation data; and a display output unit that outputs for display the plurality of images acquired by the image acquisition unit, in the display mode in accordance with the display mode data associated with the image designation data.

According to the present invention, there is also provided still another program for causing a computer to function as an image designation information output unit that outputs, to another image processing device, image designation information for designating a plurality of images stored in an external image management server in association with an account corresponding to a user of the image processing device in the external image management server, in association with display mode data representing a display mode of the plurality of images, the another image processing device including: an image designation information receiving unit that receives the image designation information; an image acquisition unit that acquires the plurality of images which are stored in the external image management server and designated based on the image designation information; and a display output unit that outputs for display the plurality of images acquired by the image acquisition unit, in the display mode in accordance with the display mode data associated with the image designation information.

According to the present invention, there is also provided still another computer-readable information storage medium having stored thereon a program for causing a computer to function as an image designation information output unit that outputs, to another image processing device, image designation information for designating a plurality of images stored in an external image management server in association with an account corresponding to a user of the image processing device in the external image management server, in association with display mode data representing a display mode of the plurality of images, the another image processing device including: an image designation information receiving unit that receives the image designation information; an image acquisition unit that acquires the plurality of images which are stored in the external image management server and designated based on the image designation information; and a display output unit that outputs for display the plurality of images acquired by the image acquisition unit, in the display mode in accordance with the display mode data associated with the image designation information.

According to the present invention, in the display mode in accordance with the display mode data output from one image processing device, the plurality of images stored in the external image management server are output for display in another image processing device. Therefore, the display mode of the plurality of images to be shared may be set without being aware of the image management server in which the images are registered.

In an aspect of the present invention, the first image processing device further includes a storage unit that stores the display mode data in association with an identifier, the second image processing device further includes a storage unit that stores the display mode data in association with an identifier, the display mode data stored in the storage unit included in the first image processing device and the display mode data stored in the storage unit included in the second image processing device have a common correspondence relationship between the display mode corresponding to the display mode data and the identifier associated with the display mode data, the image designation data output unit outputs the image designation data to the second image processing device along with the identifier corresponding to the display mode of the plurality of images, and the display output unit outputs for display the plurality of images in the display mode corresponding to the identifier, which is received along with the image designation data that is received from the first image processing device. With this configuration, compared to a case where the display mode data is exchanged between the image processing devices, an amount of data to be exchanged between the image processing devices may be reduced.

Further, in an aspect of the present invention, the display mode data indicates a rule on a positional relationship in which the plurality of images are displayed, and the display output unit outputs for display the plurality of images in the positional relationship in accordance with the display mode data. With this configuration, the positional relationship in which the plurality of images to be shared are displayed may be set without being aware of the image management server in which the images are registered.

Further, in an aspect of the present invention, the display mode data indicates a rule on a display order of the plurality of images, and the display output unit sequentially outputs for display the plurality of images in the display order in accordance with the display mode data. With this configuration, the display order of the plurality of images to be shared may be set without being aware of the image management server in which the images are registered.

Further, in an aspect of the present invention, the display mode data indicates a rule on a timing at which an image to be displayed is switched, and the display output unit switches an image to be output for display at the timing in accordance with the display mode data. With this configuration, the timing at which the image to be output for display is switched may be set without being aware of the image management server in which the images are registered.

### Brief Description of Drawings

[FIG. 1] A diagram illustrating an example of a network configuration of an image processing system according to an embodiment of the present invention.
[FIG. 2] A functional block diagram illustrating an example of functions realized by the image processing system according to this embodiment.
[FIG. 3] A diagram illustrating an example of service management data.
[FIG. 4] A diagram illustrating an example of album data.
[FIG. 5] A diagram illustrating an example of display mode management data.
[FIG. 6] A diagram illustrating an example of game user account data.
[FIG. 7] A diagram illustrating an example of service account data.
[FIG. 8] A diagram illustrating an example of registered image management data.
[FIG. 9] A diagram illustrating an example of comment data.
[FIG. 10 A flow chart illustrating an example of a flow of processing performed by the image processing system according to this embodiment.
[FIG. 11] A diagram illustrating an example of sharing management data.
[FIG. 12] A diagram illustrating an example of a top screen.
[FIG. 13] A diagram illustrating an example of a top space.
[FIG. 14] A flow chart illustrating an example of a flow of processing performed by a game machine according to this embodiment.
[FIG. 15] A flow chart illustrating an example of a flow of processing performed by the game machine according to this embodiment.
[FIG. 16] A diagram illustrating an example of a service view screen.
[FIG. 17] A diagram illustrating an example of an album view screen.
[FIG. 18] A diagram illustrating an example of a grid view screen.
[FIG. 19] A diagram illustrating an example of an enlarged display screen.

### Description of Embodiments

In the following, an embodiment of the present invention is described in detail with reference to the accompanying drawings.

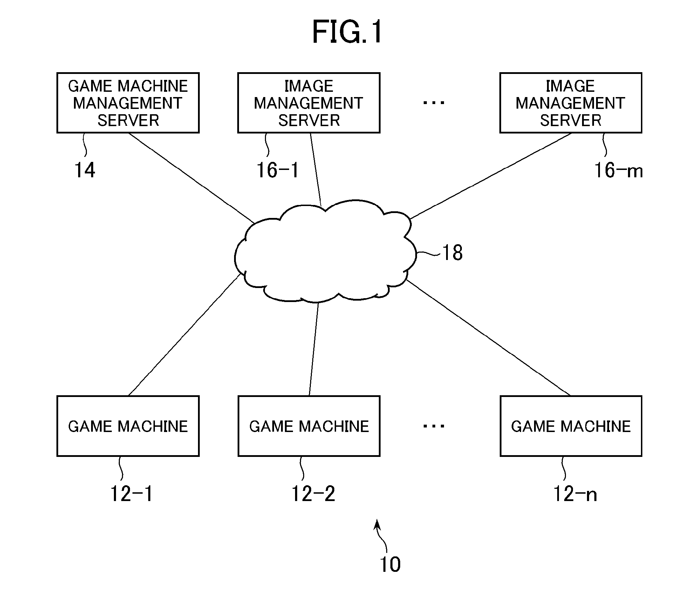

FIG. 1 is a diagram illustrating an example of a network configuration of an image processing system 10 according to an embodiment of the present invention. As illustrated in FIG. 1, the image processing system 10 according to this embodiment includes, for example, game machines (image processing devices) 12 (12-1 to 12-n), a game machine management server 14, and image management servers 16 (16-1 to 16-m). The game machines 12, the game machine management server 14, and the image management servers 16 are connected to a network 18 such as the Internet and can communicate with one another.

Each of the game machines 12 includes a control unit, which is, for example, a program control device such as a central processing unit (CPU) that operates in accordance with a program installed in the game machine 12, a storage unit, which is a memory element such as a read-only memory (ROM) or a random access memory (RAM), a hard disk drive, or the like, a communication unit, which is a communication interface such as a network board, a controller, which is general-purpose operation input unit, an output unit such as a display, an optical disc drive for reading an optical disc (computer readable information storage medium) such as a digital versatile disc (DVD)-ROM or a Blu-ray (trademark) disc, a universal serial bus (USB) port, and the like.

The game machine management server 14 and the image management servers 16 are, for example, known server computers, and each include a control unit, which is a program control device such as a CPU that operates in accordance with an installed program, a storage unit, which is a memory element such as a ROM or a RAM, a hard disk drive, or the like, a communication unit, which is a communication interface such as a network board, and the like.

In this embodiment, the game machine management server 14 is operated by, for example, a business entity which is a distributor of the game machines 12. The image management servers 16 are operated by, for example, business entities of different image management services.

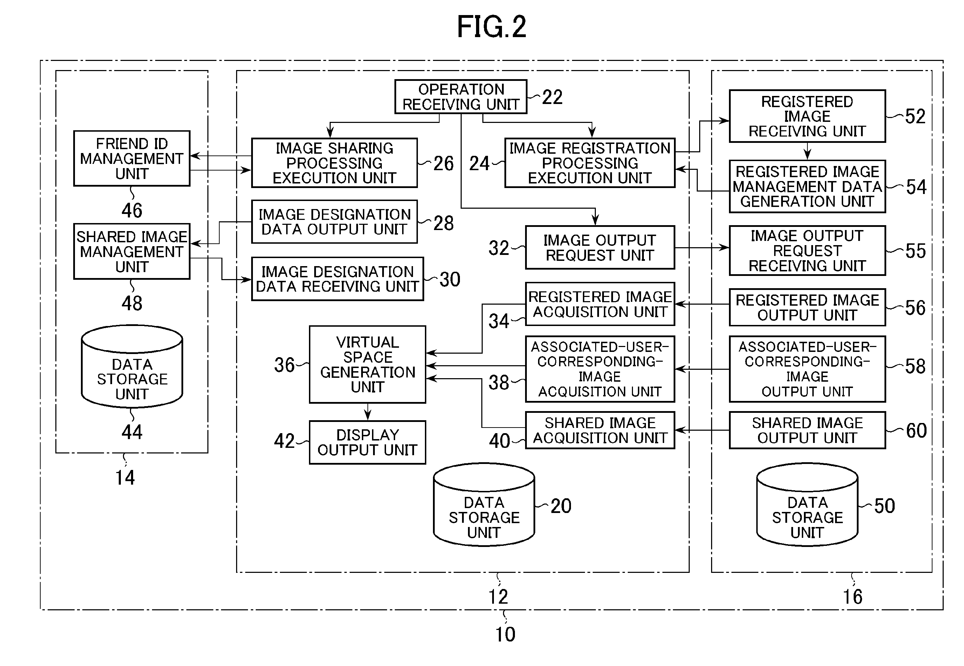

FIG. 2 is a functional block diagram illustrating an example of functions implemented by the image processing system 10 according to this embodiment.

As illustrated in FIG. 2, the game machine 12 according to this embodiment includes a data storage unit 20, an operation receiving unit 22, an image registration processing execution unit 24, an image sharing processing execution unit 26, an image designation data output unit 28, an image designation data receiving unit 30, an image output request unit 32, a registered image acquisition unit 34, a virtual space generation unit 36, an associated-user-corresponding-image acquisition unit 38, a shared image acquisition unit 40, and a display output unit 42. The game machine management server 14 according to this embodiment includes a data storage unit 44, a friend ID management unit 46, and a shared image management unit 48. The image management server 16 according to this embodiment includes a data storage unit 50, a registered image receiving unit 52, a registered image management data generation unit 54, an image output request receiving unit 55, a registered image output unit 56, an associated-user-corresponding-image output unit 58, and a shared image output unit 60.

The above-mentioned elements are implemented by executing programs installed in the game machine 12, the game machine management server 14, and the image management server 16, which are computers, by the control units of the game machine 12, the game machine management server 14, and the image management server 16. Note that, the programs are supplied to the game machine 12, the game machine management server 14, and the image management server 16 via, for example, a computer-readable information transmission medium such as a compact disc (CD)-ROM or a DVD-ROM, or a communication network such as the Internet.

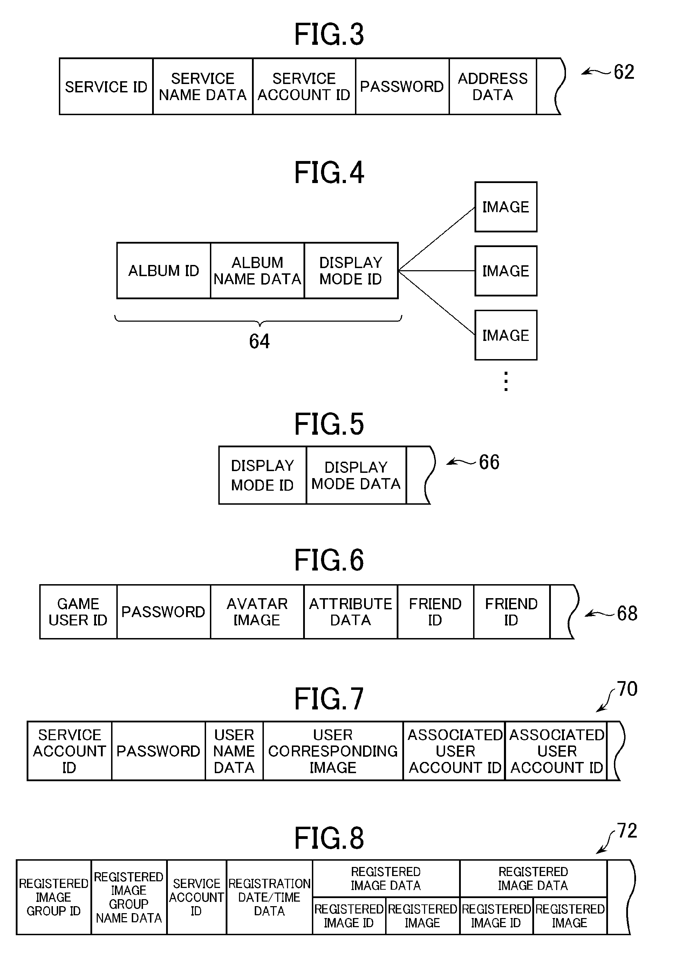

In this embodiment, the data storage unit 20 of the game machine 12 stores in advance service management data 62 exemplified in FIG. 3, album data 64 exemplified in FIG. 4, and display mode management data 66 exemplified in FIG. 5.

The service management data 62 is, for example, data for managing in the game machine 12 an image management service of which a user of the game machine 12 holds an account. As illustrated in FIG. 3, the service management data 62 contains a service ID, which is an identifier of the image management service, service name data, which is a name of the image management service, a service account ID, which is an identifier of the account in the image management service, a password in the image management service, address data (such as Internet Protocol (IP) address or uniform resource locator (URL)) indicating an address of an image management server 16 that provides the image management service, and the like. In this embodiment, the data storage unit 20 of the game machine 12 stores a plurality of pieces of the service management data 62 corresponding to different image management servers 16 (that is, different image management services).

In this embodiment, the game machine 12 has completed processing of logging into each image management server 16 by outputting in advance a combination of the account ID and the password contained in the service management data 62 to a destination corresponding to the address data. In other words, in this embodiment, the game machine 12 and the image management servers 16 are already in a state in which the user having logged into each of the image management servers 16 can transmit and receive data.

The album data 64 is, for example, data corresponding to an image group selected by the user from among image groups read in advance from a flash memory or the like to the game machine 12. As illustrated in FIG. 4, the album data 64 contains an album ID, which is an identifier of the album data 64, album name data indicating a name of an album, a display mode ID, which is an identifier of the display mode management data 66 corresponding to a display mode of a plurality of images associated with the album data 64, and the like. The album data 64 is associated with the plurality of images. In this manner, in this embodiment, a plurality of relevant images are managed in association with each other by the album data 64 in the game machine 12. The plurality of images associated by the album data 64 is hereinafter referred to as an album image group. In this embodiment, for example, in a case where the game machine 12 reads the image groups from the flash memory or the like, the read image groups are output as a list to be displayed on a display. Then, in a case where the user uses the controller to execute an operation of selecting an image group the user wants to register in an album from among the image groups displayed as the list, an operation of setting a name of the album, and an operation of specifying a display mode of the image group, the game machine 12 receives the operations, generates album data 64 containing a new album ID, album name data indicating the set album name, and a display mode ID corresponding to the specified display mode of the image group, and associates the generated album data 64 with the image group selected by the user.

The display mode management data 66 is, for example, data for managing the display mode of the images in the image processing system 10. As illustrated in FIG. 5, the display mode management data 66 contains a display mode ID, which is an identifier of the display mode management data 66, and display mode data representing a display mode. Details of the display mode data are described later. In this embodiment, for example, the data storage unit 20 of each game machine 12 stores common display mode management data 66.

In this embodiment, the data storage unit 44 of the game machine management server 14 stores in advance game user account data 68 exemplified in FIG. 6.

The game user account data 68 is, for example, data for managing in the game machine management server 14 the account of the user of the game machine 12 in a network of game machines. As illustrated in FIG. 6, the game user account data 68 contains a game user ID, which is an identifier of the user, a password used for logging into the game machine management server 14, an avatar image, which is a representative image of the user in the network of game machines, attribute data indicating a mailing address, a telephone number, and the like of the user, and the like. The game user account data 68 also contains at least one friend ID, which is a game user ID of an associated user in the network of game machines (for example, friend user) . The user corresponding to the friend ID is hereinafter referred to as a friend of the user corresponding to the game user ID. In this manner, in this embodiment, an association between the users in the network of game machines (friend relationship) is managed in the game machine management server 14. In this embodiment, the data storage unit 44 of the game machine management server 14 also stores game machine address data in which the above-mentioned game user ID and an address (for example, IP address) of the game machine 12 used by the user corresponding to the game user ID are associated with each other.

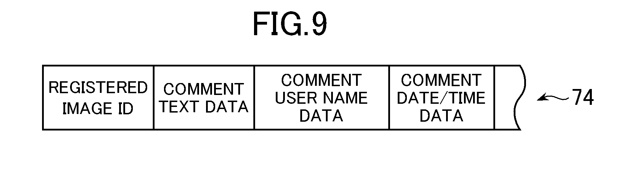

In this embodiment, the data storage unit 50 of the image management server 16 stores in advance service account data 70 exemplified in FIG. 7, registered image management data 72 exemplified in FIG. 8, and comment data 74 exemplified in FIG. 9.

The service account data 70 is, for example, data for managing in the image management server 16 the account of the user in the image management service. As illustrated in FIG. 7, the service account data 70 contains a service account ID, which is an identifier of the account of the user in the image management service, a password corresponding to the service account ID, user name data indicating a name of the user corresponding to the account, a user corresponding image, which is an image representing the user corresponding to the account (for example, image representing the face of the user corresponding to the account), and the like. The service account data 70 also contains at least one associated user account ID, which is a service account ID of the associated user in the image management service. The user corresponding to the associated user account ID is hereinafter referred to as an associated user of the user corresponding to the service account ID. In this manner, in this embodiment, each image management server 16 manages an association between users in the image management service corresponding to the image management server 16.

The registered image management data 72 is, for example, data for managing images that are registered by the user in the image management server 16. As illustrated in FIG. 8, the registered image management data 72 contains a registered image group ID, which is an identifier of a registered image group, registered image group name data indicating a name of the registered image group, a service account ID of a user who registered the registered image group, registration date/time data indicating the date and time of the registration of the registered image group, and at least one piece of registered image data. The registered image data contains a registered image ID, which is an identifier of a registered image, and the registered image, which is an image registered by the user.

In this manner, in this embodiment, images registered by the user as a plurality of images associated with each other in the image management server 16 are managed as the registered image group by the registered image management data 72 as the plurality of images associated with each other.

The comment data 74 is, for example, data corresponding to a comment received by the image management server 16 from a user to an image. As illustrated in FIG. 9, the comment data 74 contains a registered image ID of a registered image on which the comment is received, comment text data indicating a content of the comment, comment user name data indicating a name of the user who wrote the comment, comment date/time data indicating the date and time of the reception of the comment, and the like.

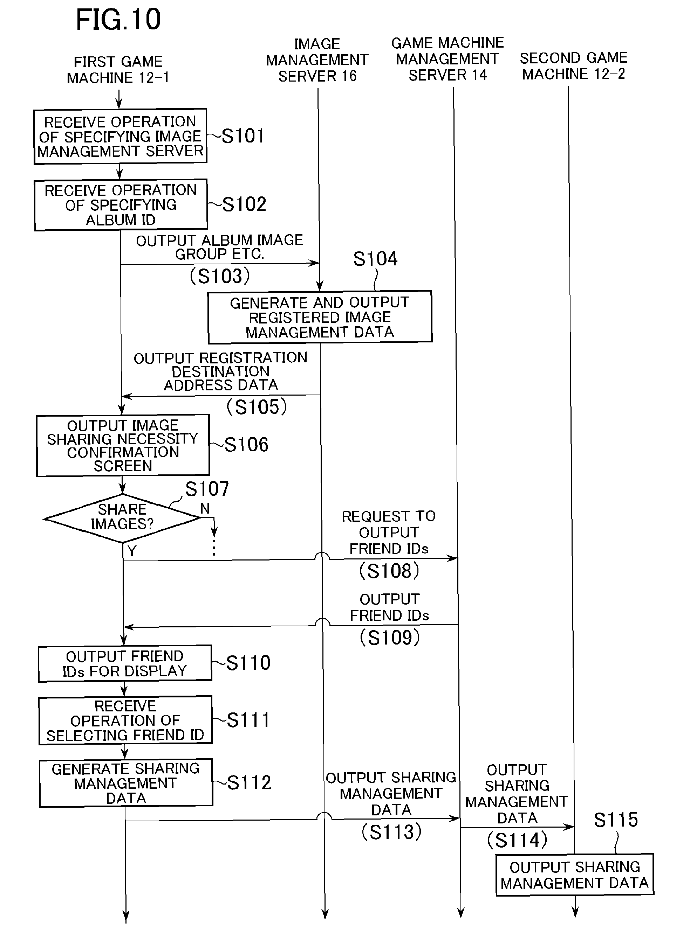

Next, an example of a flow of processing of registering and sharing images performed by the image processing system 10 according to this embodiment is described with reference to a flow chart exemplified in FIG. 10. Note that, in this processing example, images that are registered by a user of a first game machine 12-1 are shared with a user of a second game machine 12-2.

First, the operation receiving unit 22 of the first game machine 12-1 receives, from the user through the controller or the like of the game machine 12, an operation of specifying an image management server 16 to which the images are to be registered (S101). Then, the operation receiving unit 22 of the first game machine 12-1 receives from the user an operation of specifying an album ID corresponding to an album image group to be registered (S102). Then, the image registration processing execution unit 24 of the first game machine 12-1 outputs the album name data and the album image group associated in the album data 64 with the album ID received in the processing denoted by S102 to the image management server 16 specified in the processing denoted by S101. Then, the registered image receiving unit 52 of the image management server 16 receives the album image group associated with the album ID (S103).

Then, the registered image management data generation unit 54 of the image management server 16 generates the registered image management data 72 containing the received album image group as the registered image group, and outputs the registered image management data 72 to the data storage unit 50 of the image management server 16 (S104). At this time, the registered image management data generation unit 54 of the image management server 16 sets a new registered image group ID to the registered image management data 72. The registered image management data generation unit 54 of the image management server 16 also sets the received album name data to the registered image group name data, and sets a new registered image ID to each registered image belonging to the registered image group.

Then, the registered image management data generation unit 54 of the image management server 16 generates image designation data for designating the registered image group that is registered in the processing denoted by S104 (in this processing example, for example, registration destination address data indicating an address (for example, IP address or URL) corresponding to the registered image group) and outputs the image designation data to the game machine 12, and the image registration processing execution unit 24 of the first game machine 12-1 receives the image designation data (S105). Then, the image sharing processing execution unit 26 of the first game machine 12-1 outputs an image sharing necessity confirmation screen (not shown) for confirming whether or not the registered images are to be shared, to be displayed on a display of the first game machine 12-1 (S106).

Then, depending on an operation received from the user by the operation receiving unit 22 of the first game machine 12-1, the image sharing processing execution unit 26 of the first game machine 12-1 judges whether or not to share the images (S107). In a case where the images are not to be shared (S107: N), the processing described in this processing example is ended. In a case where the images are to be shared (S107: Y), the image sharing processing execution unit 26 of the first game machine 12-1 outputs an output request for friend IDs to the game machine management server 14. Then, the friend ID management unit 46 of the game machine management server 14 receives the output request (S108).

Then, in response to the request, the friend ID management unit 46 of the game machine management server 14 outputs, to the first game machine 12-1, the friend IDs contained in the game user account data 68 of the user who made the request, and the image sharing processing execution unit 26 of the first game machine 12-1 receives the friend IDs (S109). Then, the image sharing processing execution unit 26 of the first game machine 12-1 outputs the received friend IDs as a list to be displayed on the display (S110).

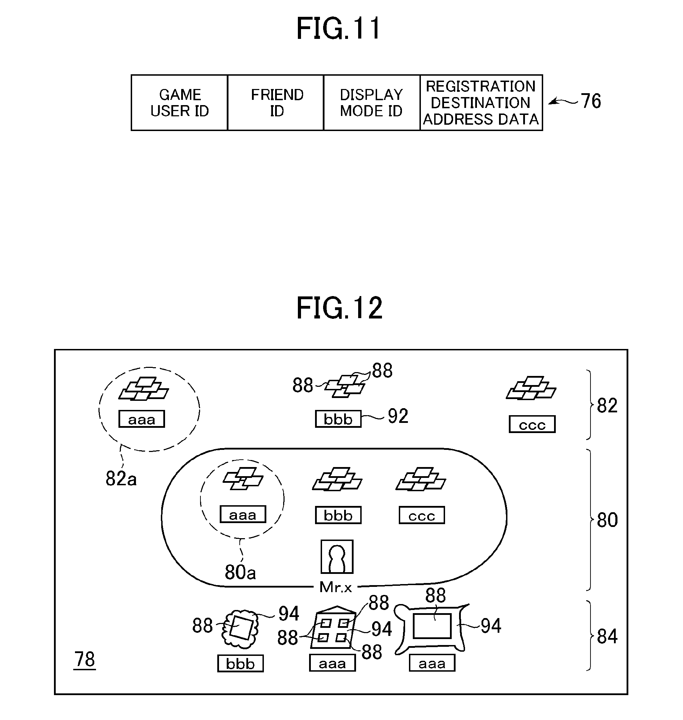

At this time, the operation receiving unit 22 of the first game machine 12-1 receives from the user an operation of selecting a friend ID corresponding to a friend with whom the images are to be shared, from among the output friend IDs (S111). In this processing example, a friend ID corresponding to a user of the second game machine 12-2 is selected. Then, the image sharing processing execution unit 26 of the first game machine 12-1 generates sharing management data 76 exemplified in FIG. 11, which contains a game user ID corresponding to the user of the first game machine 12-1, the friend ID selected in the processing denoted by S111, a display mode ID associated with the album ID received in the processing denoted by S102, and the registration destination address data received in the processing denoted by S105 (S112). Then, the image designation data output unit 28 of the first game machine 12-1 outputs, to the game machine management server 14, the sharing management data 76 generated in the processing denoted by S112. Then, the shared image management unit 48 of the game machine management server 14 receives the sharing management data 76 (S113).

Then, based on the friend ID contained in the sharing management data 76 received in the processing denoted by S113, the shared image management unit 48 of the game machine management server 14 identifies an address of the second game machine 12-2 and outputs, to the second game machine 12-2 whose address has been identified, the sharing management data 76 received in the processing denoted by S113, and the image designation data receiving unit 30 of the second game machine 12-2 receives the sharing management data 76 (S114). Then, the image sharing processing execution unit 26 of the second game machine 12-2 outputs the sharing management data 76 to the data storage unit 20 of the second game machine 12-2 (S115), and ends the processing described in this processing example.

As described above, in the image processing system 10 according to this embodiment, the registered image group that is registered by the user of the first game machine 12-1 in the image management server 16 is shared with the user of the second game machine 12-2 by the sharing management data76. The registered image group subjected to the above-mentioned sharing processing is hereinafter referred to as a shared image group. Note that, processing of outputting, in response to a request from the user of the second game machine 12-2, the shared image group to be displayed on a display of the second game machine 12-2 is described later.

The game machine 12 according to this embodiment outputs, in response to a top screen display operation received by the operation receiving unit 22 of the game machine 12 from the user, a top screen 78 exemplified in FIG. 12 to be displayed on the display. As illustrated in FIG. 12, the top screen 78 includes a registered image placement region 80, an associated-user-corresponding-image placement region 82, and a shared image placement region 84. In the example of FIG. 12, the associated-user-corresponding-image placement region 82 and the shared image placement region 84 are placed above and below the registered image placement region 80 at the center, respectively.

The registered image placement region 80 includes a plurality of registered image placement sub-regions 80a. Each registered image placement sub-region 80a is associated with an image management server 16. The associated-user-corresponding-image placement region 82 includes a plurality of associated-user-corresponding-image placement sub-regions 82a. Each associated-user-corresponding-image placement sub-region 82a is associated with an image management server 16. In this embodiment, the registered image placement sub-region 80a and the associated-user-corresponding-image placement sub-region 82a corresponding to the same image management server 16 are placed in alignment with each other.

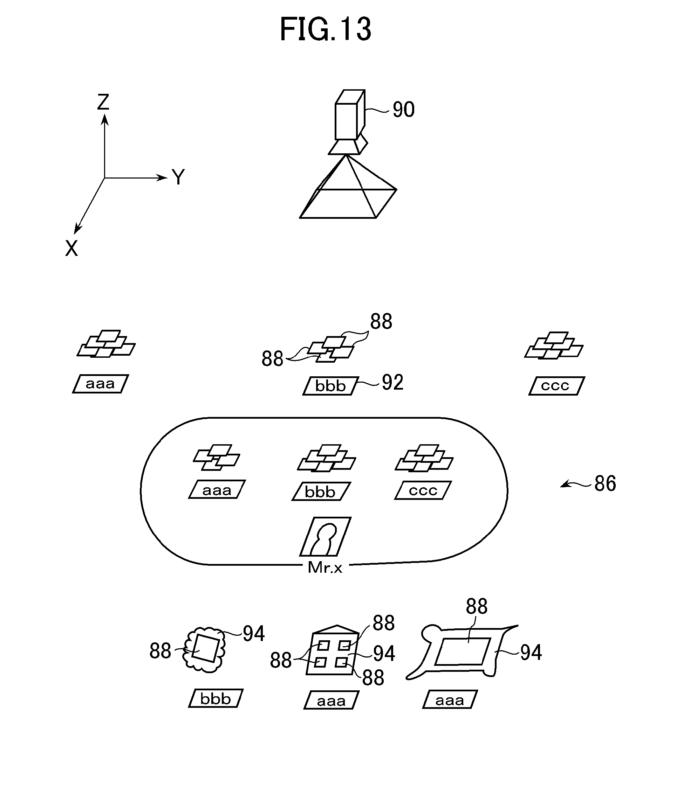

The top screen 78 illustrated in FIG. 12 visualizes a virtual three dimensional space (in this embodiment, for example, top space 86 illustrated in FIG. 13). Specifically, the top screen 78 is generated by, for example, imaging the top space 86 as seen from a viewpoint 90 in the same space in real time by a known three dimensional computer graphics technology. In the top space 86, a large number of picture image objects 88, which are virtual three dimensional models indicating pictures, are placed.

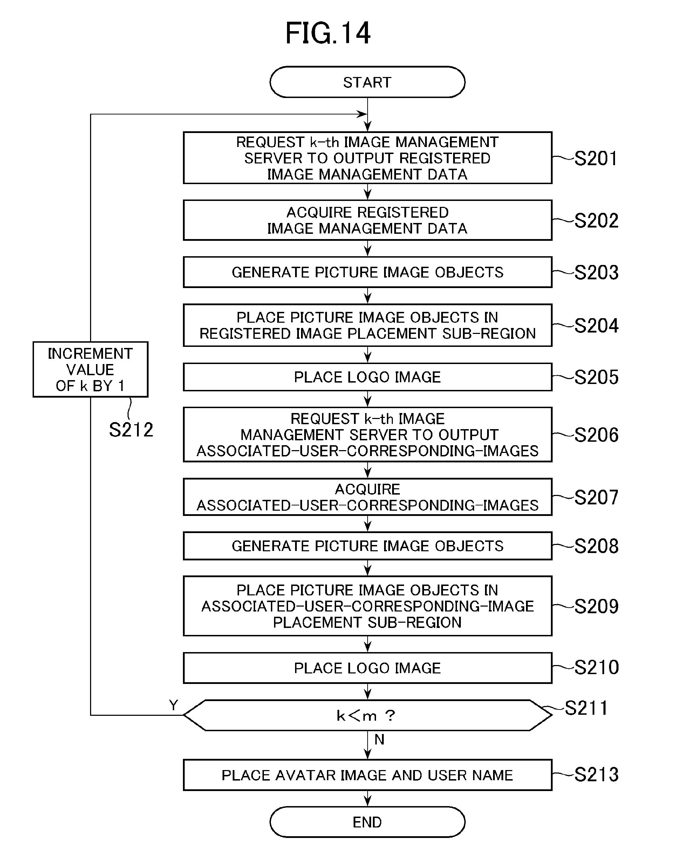

Next, an example of a flow of processing of placing the images in the registered image placement region 80 and the associated-user-corresponding-image placement region82,whichisperformed by the game machine 12 according to this embodiment, is described with reference to a flow chart of FIG. 14. Note that, in the following processing example, an initial value of k is 1. The image processing system 10 according to this embodiment includes m image management servers 16 as described above.

First, the image output request unit 32 of the game machine 12 outputs, to the k-th image management server 16-k, an output request for registered image management data 72. Then, the image output request receiving unit 55 of the k-th image management server 16-k receives the output request (S201). The output request is associated with the service account ID of the user who makes the output request in the k-th image management server 16-k.

Then, the registered image output unit 56 of the k-th image management server 16-k identifies the registered image management data 72 containing the received service account ID, and outputs the registered image management data 72 to the game machine 12. Then, the registered image acquisition unit 34 of the game machine 12 acquires the registered image management data 72 output from the k-th image management server 16-k (S202).

Then, based on the registered image management data 72 acquired in the processing denoted by S202, the virtual space generation unit 36 of the game machine 12 identifies a predetermined number of (for example, 10) registered images that are registered most recently, and generates picture image objects 88 corresponding to the registered images (S203). Then, the virtual space generation unit 36 of the game machine 12 places the generated picture image objects 88 in a registered image placement sub-region 80a corresponding to the k-th image management server 16-k (S204). Then, the virtual space generation unit 36 of the game machine 12 places a logo image 92 corresponding to the k-th image management server 16-k under the registered image placement sub-region 80a corresponding to the k-th image management server 16-k (S205). Note that, in this embodiment, the logo image 92 is stored in advance in the data storage unit 20 of the game machine 12.

Then, the image output request unit 32 of the game machine 12 outputs, to the k-th image management server 16-k, an output request for user corresponding images (associated-user-corresponding-images) of users managed in the k-th image management server 16-k as associated users of the user who makes the output request. Then, the image output request receiving unit 55 of the k-th image management server 16-k receives the output request (S206). The output request is associated with the service account ID of the user who makes the output request in the k-th image management server 16-k.

Then, the associated-user-corresponding-image output unit 58 of the k-th image management server 16-k identifies the user corresponding images (associated-user-corresponding-images) of the users managed in the k-th image management server 16-k as the associated users of the user corresponding to the received service account ID, and outputs the user corresponding images to the game machine 12. Then, the associated-user-corresponding-image acquisition unit 38 of the game machine 12 acquires the associated-user-corresponding-images output from the k-th image management server 16-k (S207).

Then, the virtual space generation unit 36 of the game machine 12 randomly identifies a predetermined number of (for example, 10) associated-user-corresponding-images from among the associated-user-corresponding-images acquired in the processing denoted by S207, and generates picture image objects 88 corresponding to the associated-user-corresponding-images (S208). Then, the virtual space generation unit 36 of the game machine 12 places the picture image objects 88 in an associated-user-corresponding-image placement sub-region 82a corresponding to the k-th image management server 16-k (S209). Then, the virtual space generation unit 36 of the game machine 12 places the logo image 92 corresponding to the k-th image management server 16-k under the associated-user-corresponding-image placement sub-region 82a corresponding to the k-th image management server 16-k (S210).

Then, the virtual space generation unit 36 of the game machine 12 checks whether or not the value of k is less than m (S211). In a case where the value of k is less than m (S211: Y), the virtual space generation unit 36 of the game machine 12 increments the value of k by 1 (S212), and executes the processing of S201 and subsequent steps again. Otherwise (S211: N), the virtual space generation unit 36 of the game machine 12 places the avatar image and the user name of the user of the game machine 12 under the registered image placement region 80 (S213), and ends the processing described in this processing example.

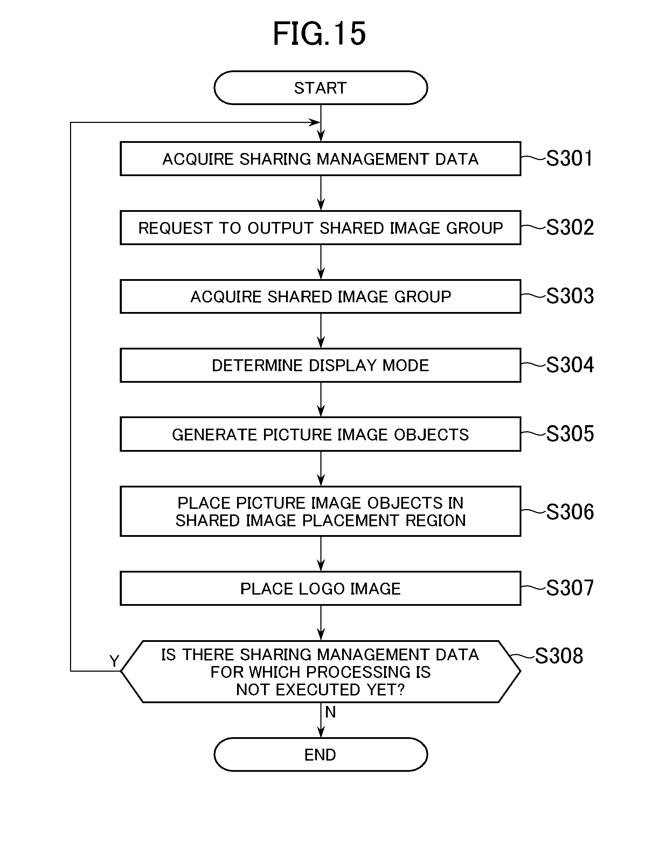

Next, an example of a flow of processing of placing the images in the shared image placement region 84, which is performed by the game machine 12 according to this embodiment, is described with reference to a flow chart of FIG. 15.

First, the image output request unit 32 of the game machine 12 acquires one piece of the sharing management data 76 which is stored in the data storage unit 20 of the game machine 12 and for which the processing described in this processing example is not executed yet (S301). Then, the image output request unit 32 of the game machine 12 outputs, to the destination corresponding to the registration destination address data contained in the sharing management data 76, an output request for a shared image group. Then, the image output request receiving unit 55 of the image management server 16 corresponding to the address indicated by the registration destination address data receives the output request (S302). Then, the shared image output unit 60 of the image management server 16 outputs, to the game machine 12, the shared image group identified based on the received address. Then, the shared image acquisition unit 40 of the game machine 12 acquires the shared image group (S303).

Then, the virtual space generation unit 36 of the game machine 12 determines, in the display mode management data 66 stored in the data storage unit 20 of the game machine 12, the display mode indicated by the display mode data associated with the display mode ID contained in the sharing management data 76 acquired in the processing denoted by S301, as the display mode of the registered image group acquired in the processing denoted by S303 (S304).

Then, the virtual space generation unit 36 of the game machine 12 generates picture image objects 88 corresponding to the registered image group acquired in the processing denoted by S303, in the display mode determined in the processing denoted by S304 (S305). Then, the virtual space generation unit 36 of the game machine 12 places the picture image objects 88 generated in the processing denoted by S305 in the shared image placement region 84 (S306). Then, the virtual space generation unit 36 of the game machine 12 identifies, based on the registration destination address data contained in the sharing management data 76, the image management server 16 in which the registered image group is registered, and places the logo image 92 corresponding to the identified image management server 16 under the picture image objects 88 placed in the processing denoted by S306 (S307) .

Then, the image output request unit 32 of the game machine 12 checks whether or not there is a piece of the sharing management data 76 which is stored in the data storage unit 20 of the game machine 12 and for which the processing described in this processing example is not executed yet (S308). In a case where there is such piece of data (S308: Y), the processing of S301 and subsequent steps is executed again. In a case where there is no such piece of data (S308: N), the processing described in this processing example is ended. In this manner, in this processing example, the game machine 12 identifies the image management service which manages the registered image group and the logo image 92 corresponding to the identified image management service, and places the identified logo image 92 in association with the registered image group in the shared image placement region 84. Therefore, the user of the game machine 12 can easily grasp the image management service which manages the registered image group.

As illustrated in FIG. 12, the picture image objects 88 placed in the shared image placement region 84 are set in photo frame objects 94 of various designs. Further, one picture image object 88 is set in some of the photo frame objects 94, and a plurality of picture image objects 88 are set in others. The display mode data indicates, for example, a design such as a color, a shape, and the like of the photo frame object 94 in which a picture image object 88 corresponding to the shared registered image group is set. Further, for the photo frame object 94 in which a plurality of picture image objects 88 are set, the display mode data may indicate, for example, a positional relationship among the picture image objects 88 and the like.

Further, the virtual space generation unit 36 may switch, in accordance with the display mode indicated by the display mode data, the registered images to be attached to the picture image object 88 set in the photo frame object 94 sequentially with the elapse of time. In this case, the display mode data may indicate a rule on the display order of the registered images belonging to the registered image group and a rule on a timing at which the registered images to be attached to the picture image object 88 are switched (for example, every 10 seconds).

Then, the display output unit 42 outputs the screen that visualizes the top space 86 in which the picture image objects 88 are placed in the processing denoted by S201 to S213 and S301 to S308 described above to be displayed on the display.

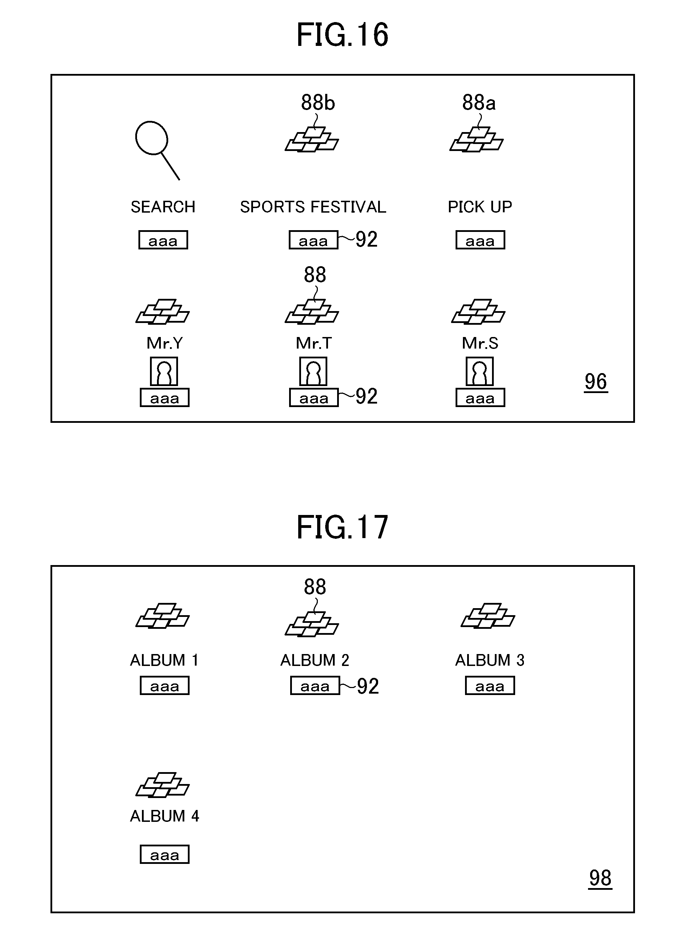

In a state in which the top screen 78 is output to be displayed on the display of the game machine 12, in a case where the operation receiving unit 22 receives an operation of selecting a picture image object 88 in the associated-user-corresponding-image placement region 82, the display output unit 42 outputs a service view screen 96 exemplified in FIG. 16, which corresponds to the associated-user-corresponding-image placement sub-region 82a in which the selected picture image object 88 is placed, to be displayed on the display. Similarly to the top screen 78, the service view screen 96 is a screen that visualizes the virtual space in which the picture image objects 88 are placed. In response to an operation of selecting an associated-user-corresponding-image placement sub-region 82a, the virtual space generation unit 36 places, in the image management server 16 corresponding to the selected associated-user-corresponding-image placement sub-region 82a, the picture image objects 88 corresponding to the registered image groups that are registered by the associated users respectively corresponding to the associated-user-corresponding-images acquired in the processing denoted by S207 described above, in the regions corresponding to the respective associated users, and places the names of the associated users, the user corresponding images, and the logo images 92 of the image management servers 16 in which the registered image groups are registered below the regions. In this embodiment, the virtual space on which the service view screen 96 is based also includes a region in which picture image objects 88 (picked-up picture image objects 88a) corresponding to images selected by the business entity of the image management service corresponding to the image management server 16 are placed, and a region in which picture image objects 88 (search result picture image objects 88b) corresponding to images found as image search results are placed.

In a state in which the top screen 78 is output to be displayed on the display of the game machine 12, in a case where the operation receiving unit 22 receives an operation of selecting a picture image object 88 in the registered image placement sub-region 80a, the display output unit 42 outputs an album view screen 98 exemplified in FIG. 17, which corresponds to the registered image placement sub-region 80a in which the selected picture image object 88 is placed, to be displayed on the display. Similarly to the top screen 78, the album view screen 98 is a screen that visualizes the virtual space in which the picture image objects 88 are placed. The virtual space generation unit 36 identifies at least one piece of registered image management data 72 corresponding to the registered image placement sub-region 80a in which the selected picture image object 88 is placed. Then, the virtual space generation unit 36 places the picture image objects 88 corresponding to the registered image group contained in the registered image management data 72, in a region corresponding to the registered image group ID, and places, below the region, the name of the registered image group and the logo image 92 of the image management server 16 in which the registered image group is registered. In this manner, in the virtual space on which the album view screen 98 is based, the picture image objects 88 are placed in a different region for each of the corresponding registered image groups.

In a state in which the service view screen 96 is output to be displayed on the display of the game machine 12, in a case where the operation receiving unit 22 receives an operation of selecting a picture image object 88, the display output unit 42 outputs an album view screen 98 similar to that of FIG. 17, which corresponds to a region in which the selected picture image object 88 is placed, to be displayed on the display.

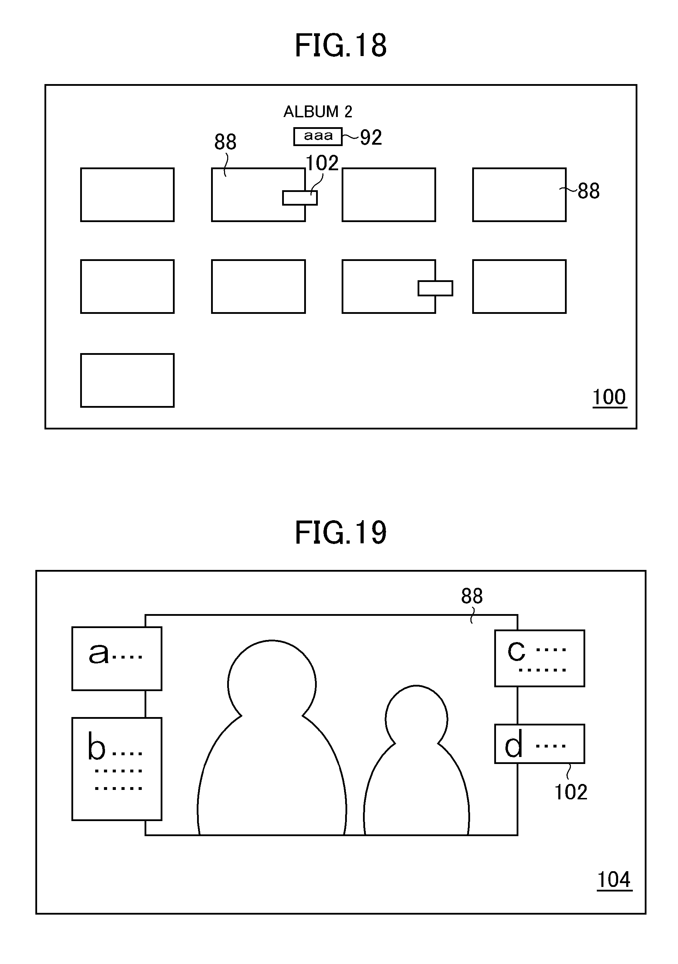

In a state in which the top screen 78 is output to be displayed on the display of the game machine 12, in a case where the operation receiving unit 22 receives an operation of selecting a picture image object 88 placed in the shared image placement region 84, the display output unit 42 outputs a grid view screen 100 exemplified in FIG. 18, which corresponds to the selected picture image object 88, to be displayed on the display. Similarly to the top screen 78, the grid view screen 100 is a screen that visualizes the virtual space in which the picture image objects 88 are placed. The virtual space generation unit 36 identifies registered image management data 72 corresponding to the region in which the selected picture image object 88 is placed. Then, the virtual space generation unit 36 arranges in rows and columns the picture image objects 88 corresponding to each registered image contained in the identified registered image management data 72. Then, the virtual space generation unit 36 acquires the comment data 74 associated with each registered image from the image management server 16. Then, the virtual space generation unit 36 places a tag image object 102 at lower right of the picture image object 88 corresponding to the registered image with which the comment data 74 is associated. Then, the virtual space generation unit 36 places, above the picture image objects 88 arranged in rows and columns, the name of the registered image group and the logo image 92 of the image management server 16 in which the registered image group is registered. In this manner, the user can recognize the presence or absence of comments on the registered images.

Then, in a state in which the grid view screen 100 is output to be displayed on the display of the game machine 12, in a case where the operation receiving unit 22 receives an operation of selecting a picture image object 88, the display output unit 42 outputs an enlarged display screen 104 exemplified in FIG. 19, which corresponds to the selected picture image object 88, to be displayed on the display. Similarly to the top screen 78, the enlarged display screen 104 is a screen that visualizes the virtual space in which the picture image object 88 is placed.

The virtual space generation unit 36 acquires, from the comment data 74 acquired in the above-mentioned processing, a piece of the comment data 74 whose date and time indicated by the comment date/time data contained in the comment data 74 is most recent. Then, the virtual space generation unit 36 determines, based on the sum of the number of characters of the name of the user indicated by the comment user name data contained in the comment data 74 and the number of characters of the comment indicated by the comment text data, a height (number of lines) of the tag image object 102. In this embodiment, the virtual space generation unit 36 determines the height of any one of one to three lines. Then, the virtual space generation unit 36 places the tag image object 102 at the upper left end of the picture image object 88. On the tag image object 102, the name of the user indicated by the comment user name data and the comment indicated by the comment text data, which are contained in the comment data 74, are written. At this time, when the character string to be written on the tag image object 102 exceeds three lines, the virtual space generation unit 36 omits writing the content of the fourth and subsequent lines on the tag image object 102.

The virtual space generation unit 36 executes the processing as described above on pieces of the comment data 74 on which the above-mentioned processing is not executed yet, in order from the piece of the comment data 74 whose date and time indicated by the comment date/time data contained in the comment data 74 is most recent. At this time, the virtual space generation unit 36 places tag image objects 102 in order from the upper left end to the lower left end of the picture image object 88 so as not to overlap the tag image object 102 that is already placed on the picture image object 88, and in a case where there is no more space at the left end of the picture image object 88, places tag image objects 102 in order from the upper right end to the lower right end of the picture image object 88. In this manner, as illustrated in FIG. 19, the virtual space generation unit 36 places as many tag image objects 102 as can be placed at left and right ends of the picture image object 88 in order from the tag image object 102 that corresponds to the most recent comment.

Note that, in a case where data indicating a description of the image is associated with the registered image management data 72, the display output unit 42 may also output the description of the image to be displayed in the vicinity of the picture image object 88.

Also in a state in which the album view screen 98 is output to be displayed on the display of the game machine 12, in a case where the operation receiving unit 22 receives an operation of selecting a picture image object 88, the display output unit 42 outputs the grid view screen 100 similar to that of FIG. 18, which corresponds to the region in which the selected picture image object 88 is placed, to be displayed on the display.

In the image processing system 10 according to this embodiment, in a case where the operation receiving unit 22 of the game machine 12 receives from the user a display output operation on the album image group associated with the album data 64, the virtual space generation unit 36 of the game machine 12 places, in the virtual space, the picture image objects 88 based on a plurality of images belonging to the album image group, in the display mode corresponding to the display mode ID associated with the album image group by the album data 64. Then, the display output unit 42 of the game machine 12 outputs a screen that visualizes the picture image objects 88 to be displayed on the display. Therefore, the picture image objects 88 corresponding to the album image group displayed on the display of the first game machine 12-1 are in the same display mode as the picture image objects 88 corresponding to the shared image group displayed on the display of the second game machine 12-2 in the processing denoted by S301 to S308 described above. In this manner, in this embodiment, not only the plurality of images that are registered in the image management server 16 are shared between the users of the game machines 12, but also the display mode of the plurality of images is shared between the users.

Further, in the image processing system 10 according to this embodiment, on the top screen 78, the picture image objects 88 corresponding to the registered images that are registered in the image management servers 16 providing different image management services are placed in regions respectively corresponding to the image management services, and hence the images that are registered in each of the image management servers 16 may be easily grasped. Further, the associated-user-corresponding-images corresponding to associated users in each image management service are placed in a region corresponding to the image management service, and hence the associated users in each image management server 16 may be easily grasped.

Note that, the present invention is not limited to the above-mentioned embodiment.

For example, the registered image acquisition unit 34 of the game machine 12 may acquire a registered image group which is registered in an image management server 16 by a friend user of the user of the game machine 12 from the image management server 16. Then, the virtual space generation unit 36 may place the picture image objects 88 corresponding to the acquired registered image group in the registered image placement region 80 of the top space 86 along with an avatar image of the friend and a logo image 92 of the image management server 16.

Further, the method of outputting the image management server 16 and the picture image objects 88 corresponding to the registered image group to be displayed on the top screen 78 in association with each other is not limited to the above-mentioned example. For example, in a case where a registered image group corresponding to album data 64 is registered in a plurality of image management servers 16, the virtual space generation unit 36 of the game machine 12 may place picture image objects 88 corresponding to an album image group associated with the album data 64 in the registered image placement region 80 of the top space 86 along with a plurality of logo images 92 corresponding to the image management servers 16 in which the registered image group corresponding to the album image group is registered.

Further, the above-mentioned user corresponding image is not limited to an image representing the face of the user, and may be, for example, an image that is most recently registered in the image management server 16 by the user corresponding to the account.

Further, the game machine 12 may receive specifications of a registered image group, which is already registered in the image management server 16, and a display mode ID, and execute image sharing processing similar to the processing denoted by S108 to S115 described above.

Further, the virtual space generation unit 36 may place, beside picture image objects 88 corresponding to a registered image group that is registered within a predetermined period from the current date and time (for example, within the last two weeks), an image indicative of a registered image group that is registered recently.

Further, the specific numerical values and character strings described above and the specific numerical values and character strings in the drawings are merely exemplary, and the present invention is not limited to those numerical values and character strings.

## Claims

1. An image processing system, comprising:
a registered image acquisition unit that acquires, in response to a request from a user, for each of a plurality of image management servers, registered images stored in the image management server in association with an account corresponding to the user in the image management server;
an associated-user-corresponding-image acquisition unit that acquires, for the each of the plurality of image management servers, associated-user-corresponding-images registered in the image management server as images corresponding to an account of an associated user of the user; and
a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

2. The image processing system according to claim 1, further comprising:
a storage unit that stores an identifier of the account of the user in the each of the plurality of image management servers; and
an image output request unit that outputs, to the each of the plurality of image management servers, an image output request in association with the identifier of the account in the image management server,
wherein the registered image acquisition unit acquires, in response to the image output request, the registered images output from the each of the plurality of image management servers, and
wherein the associated-user-corresponding-image acquisition unit acquires, in response to the image output request, the associated-user-corresponding-images output from the each of the plurality of image management servers.

3. The image processing system according to claim 1,
wherein the registered image placement region includes a plurality of registered image placement sub-regions respectively corresponding to the plurality of image management servers,
wherein the associated-user-corresponding-image placement region includes a plurality of associated-user-corresponding-image placement sub-regions respectively corresponding to the plurality of image management servers,
wherein the each of the registered images is placed in one of the plurality of registered image placement sub-regions that corresponds to the registered image, and
wherein the each of the associated-user-corresponding-images is placed in one of the plurality of associated-user-corresponding-image placement sub-regions that corresponds to the associated-user-corresponding-image.

4. The image processing system according to claim 3, wherein for the each of the plurality of image management servers, one of the plurality of registered image placement sub-regions that corresponds to the image management server and one of the plurality of associated-user-corresponding-image placement sub-regions that corresponds to the image management server are placed in alignment with each other.

5. An image processing terminal, comprising:
a registered image acquisition unit that acquires, in response to a request from a user, for each of a plurality of image management servers, registered images stored in the image management server in association with an account corresponding to the user in the image management server;
an associated-user-corresponding-image acquisition unit that acquires, for the each of the plurality of image management servers, associated-user-corresponding-images registered in the image management server as images corresponding to an account of an associated user of the user; and
a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

6. An image processing method, comprising:
a registered image acquisition step of acquiring, in response to a request from a user, for each of a plurality of image management servers, registered images stored in the image management server in association with an account corresponding to the user in the image management server;
an associated-user-corresponding-image acquisition step of acquiring, for the each of the plurality of image management servers, associated-user-corresponding-images registered in the image management server as images corresponding to an account of an associated user of the user; and
a display output step of outputting for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

7. A program for causing a computer to function as:
a registered image acquisition unit that acquires, in response to a request from a user, for each of a plurality of image management servers, registered images stored in the image management server in association with an account corresponding to the user in the image management server;
an associated-user-corresponding-image acquisition unit that acquires, for the each of the plurality of image management servers, associated-user-corresponding-images registered in the image management server as images corresponding to an account of an associated user of the user; and
a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

8. A computer-readable information storage medium having stored thereon a program for causing a computer to function as:
a registered image acquisition unit that acquires, in response to a request from a user, for each of a plurality of image management servers, registered images stored in the image management server in association with an account corresponding to the user in the image management server;
an associated-user-corresponding-image acquisition unit that acquires, for the each of the plurality of image management servers, associated-user-corresponding-images registered in the image management server as images corresponding to an account of an associated user of the user; and
a display output unit that outputs for display a screen including a registered image placement region, in which each of the registered images is placed in association with one of the plurality of image management servers that corresponds to the registered image, and an associated-user-corresponding-image placement region, in which each of the associated-user-corresponding-images is placed in association with one of the plurality of image management servers that corresponds to the associated-user-corresponding-image.

9. An image processing system, comprising:
a first image processing device; and
a second image processing device,
the first image processing device comprising an image designation data output unit that outputs image designation data for designating a plurality of images stored in an external image management server in association with an account of a user of the first image processing device in the external image management server, in association with display mode data representing a display mode of the plurality of images,
the second image processing device comprising:
an image designation data receiving unit that receives the image designation data output from the first image processing device;
an image acquisition unit that acquires the plurality of images, which are stored in the external image management server and designated based on the image designation data; and
a display output unit that outputs for display the plurality of images acquired by the image acquisition unit, in the display mode in accordance with the display mode data associated with the image designation data.

10. The image processing system according to claim 9,
wherein the first image processing device further comprises a storage unit that stores the display mode data in association with an identifier,
wherein the second image processing device further comprises a storage unit that stores the display mode data in association with an identifier,
wherein the display mode data stored in the storage unit included in the first image processing device and the display mode data stored in the storage unit included in the second image processing device have a common correspondence relationship between the display mode corresponding to the display mode data and the identifier associated with the display mode data,
wherein the image designation data output unit outputs the image designation data to the second image processing device along with the identifier corresponding to the display mode of the plurality of images, and
wherein the display output unit outputs for display the plurality of images in the display mode corresponding to the identifier, which is received along with the image designation data that is received from the first image processing device.

11. The image processing system according to claim 9,
wherein the display mode data indicates a rule on a positional relationship in which the plurality of images are displayed, and
wherein the display output unit outputs for display the plurality of images in the positional relationship in accordance with the display mode data.

12. The image processing system according to claim 9,
wherein the display mode data indicates a rule on a display order of the plurality of images, and
wherein the display output unit sequentially outputs for display the plurality of images in the display order in accordance with the display mode data.

13. The image processing system according to claim 9,
wherein the display mode data indicates a rule on a timing at which an image to be displayed is switched, and
wherein the display output unit switches an image to be output for display at the timing in accordance with the display mode data.

14. An image processing method, comprising:
an image designation data output step of outputting, by a first image processing device, image designation data for designating a plurality of images stored in an external image management server in association with an account of a user of the first image processing device in the external image management server, in association with display mode data representing a display mode of the plurality of images;
an image designation data receiving step of receiving, by a second image processing device, the image designation data;
an image acquisition step of acquiring, by the second image processing device, the plurality of images, which are stored in the external image management server and designated based on the image designation data; and
a display output step of outputting for display, by the second image processing device, the plurality of images acquired in the image acquisition step, in the display mode in accordance with the display mode data associated with the image designation data.

15. An image processing device, comprising:
an image designation data receiving unit that receives image designation data which is output from another image processing device, is associated with display mode data representing a display mode of a plurality of images stored in an external image management server in association with an account corresponding to a user of the another image processing device in the external image management server, and designates the plurality of images;
an image acquisition unit that acquires the plurality of images, which are stored in the external image management server and designated based on the image designation data; and
a display output unit that outputs for display the plurality of images acquired by the image acquisition unit, in the display mode in accordance with the display mode data associated with the image designation data.

16. An image processing device, comprising an image designation information output unit that outputs, to another image processing device, image designation information for designating a plurality of images stored in an external image management server in association with an account corresponding to a user of the image processing device in the external image management server, in association with display mode data representing a display mode of the plurality of images,
the another image processing device comprising:
an image designation information receiving unit that receives the image designation information;
an image acquisition unit that acquires the plurality of images which are stored in the external image management server and designated based on the image designation information; and
a display output unit that outputs for display the plurality of images acquired by the image acquisition unit, in the display mode in accordance with the display mode data associated with the image designation information.

17. A program for causing a computer to function as:
an image designation data receiving unit that receives image designation data which is output from another image processing device, is associated with display mode data representing a display mode of a plurality of images stored in an external image management server in association with an account corresponding to a user of the another image processing device in the external image management server, and designates the plurality of images;
an image acquisition unit that acquires the plurality of images, which are stored in the external image management server and designated based on the image designation data; and
a display output unit that outputs for display the plurality of images acquired by the image acquisition unit, in the display mode in accordance with the display mode data associated with the image designation data.

18. A computer-readable information storage medium having stored thereon a program for causing a computer to function as:
an image designation data receiving unit that receives image designation data which is output from another image processing device, is associated with display mode data representing a display mode of a plurality of images stored in an external image management server in association with an account corresponding to a user of the another image processing device in the external image management server, and designates the plurality of images;
an image acquisition unit that acquires the plurality of images, which are stored in the external image management server and designated based on the image designation data; and
a display output unit that outputs for display the plurality of images acquired by the image acquisition unit, in the display mode in accordance with the display mode data associated with the image designation data.

19. A program for causing a computer to function as an image designation information output unit that outputs, to another image processing device, image designation information for designating a plurality of images stored in an external image management server in association with an account corresponding to a user of the image processing device in the external image management server, in association with display mode data representing a display mode of the plurality of images,
the another image processing device comprising:
an image designation information receiving unit that receives the image designation information;
an image acquisition unit that acquires the plurality of images which are stored in the external image management server and designated based on the image designation information; and
a display output unit that outputs for display the plurality of images acquired by the image acquisition unit, in the display mode in accordance with the display mode data associated with the image designation information.

20. A computer-readable information storage medium having stored thereon a program for causing a computer to function as an image designation information output unit that outputs, to another image processing device, image designation information for designating a plurality of images stored in an external image management server in association with an account corresponding to a user of the image processing device in the external image management server, in association with display mode data representing a display mode of the plurality of images,
the another image processing device comprising:
an image designation information receiving unit that receives the image designation information;
an image acquisition unit that acquires the plurality of images which are stored in the external image management server and designated based on the image designation information; and
a display output unit that outputs for display the plurality of images acquired by the image acquisition unit, in the display mode in accordance with the display mode data associated with the image designation information.
